# EUROPEAN PATENT APPLICATION

(11) **EP 4 838 730 A1**
(43) Date of publication of application: **11.11.2026**
(21) Application number: 26176050.8
(22) Date of filing: 01.05.2026
(51) Int. Cl.: H02G 5/04

(54) **BUSBAR MODULE AND BUSBAR**

(30) Priority: 06.05.2025 CN 202520883296 U
(71) Applicant: SCHNEIDER ELECTRIC INDUSTRIES SAS, 92500 Rueil-Malmaison (FR)
(72) Inventor: SONG, Xianfeng, Shanghai, 201203 (CN); HUANG, Jianliang, Shanghai, 201203 (CN); ZHOU, Longhui, Shanghai, 201203 (CN)
(74) Representative: Openshaw & Co.

(57) **Abstract**

A busbar module comprises a first submodule (1), including a first housing (11) and a plurality of phase conductors (12), wherein each phase conductor (12) is accommodated in a respective one of a plurality of first accommodating portions (111); and a second submodule (2), including a second housing (21) and a plurality of auxiliary phase conductors (22) corresponding to the plurality of phase conductors (12). The first submodule (1) is electrically connected to the second submodule (2), such that each phase conductor (12) and the corresponding auxiliary phase conductor (22) are connected in parallel to form one phase conductor group, and different phase conductor groups are insulated from each other. The second submodule (2) is mounted to the first submodule (1), such that lengths of the first submodule (1) and the second submodule (2) are aligned and the open face (112) allows an electrical component to be electrically connected to each phase conductor (12).

## Description

### TECHNICAL FIELD

The present disclosure relates to the field of electrical engineering, and in particular, to a busbar module and a busbar.

### BACKGROUND

With the continuous development of technology, the demand for electric power is increasing day by day. For example, intelligent computing centers required for AI technology have a far higher power demand than ordinary data centers, with the power density of a single cabinet exceeding 100 kW/rack. Existing busbars cannot bear such high current-carrying requirements; even if double-row busbars are adopted in a single loop, they may fail to meet the power supply demand of cabinets in the future.

Existing busbars generally adopt a single-cavity housing structure with an open track on one side. As the height of the open cavity increases, the mechanical strength thereof gradually decreases. Accordingly, each phase of such busbars is usually provided with one or two conductors, and the cross-sectional area of the conductors is restricted by the geometric dimension of the housing, limiting the maximum current of the track busbar to generally no more than 1250 A. To achieve a busbar current exceeding 1250 A, more complex and higher-cost solutions have to be adopted.

Therefore, in view of future market demands, there is a need for a busbar module with higher current-carrying capacity to solve the above problems.

### SUMMARY

The object of the present disclosure is to address at least the drawbacks present in the prior art, proposing a busbar module, characterized by comprising: a first submodule, including a first housing extending in a first direction and a plurality of phase conductors, wherein the first housing includes a plurality of first accommodating portions each having an open face, and each phase conductor is accommodated in one of the first accommodating portions; a second submodule, including a second housing extending in the first direction and a plurality of auxiliary phase conductors corresponding to the plurality of phase conductors.

The first submodule is electrically connected to the second submodule, such that each phase conductor and the corresponding auxiliary phase conductor are connected in parallel to form one phase conductor group, and different phase conductor groups are insulated from each other.

The second submodule is mounted to the first submodule, such that lengths of the first submodule and the second submodule along the first direction are aligned in a second direction perpendicular to the first direction; the open face is parallel to the first direction and allows an electrical component outside the busbar module to be electrically connected to each phase conductor.

For example, according to some embodiments of the present disclosure, in a cross section perpendicular to the first direction, the plurality of auxiliary phase conductors are enclosed by a closed contour, and the second housing constitutes at least a part of the closed contour.

For example, according to some embodiments of the present disclosure, the second housing includes a plurality of second accommodating portions, and each auxiliary phase conductor is accommodated in one of the second accommodating portions.

For example, according to some embodiments of the present disclosure, a contour of the second accommodating portion in a cross section perpendicular to the first direction is closed to surround the auxiliary phase conductor accommodated therein.

For example, according to some embodiments of the present disclosure, the plurality of auxiliary phase conductors in the second housing are arranged adjacently along a third direction perpendicular to both the first direction and the second direction; an insulating material is disposed on an outer periphery of each auxiliary phase conductor; a width of the closed contour formed by the second housing in the third direction is smaller than that of the first housing.

For example, according to some embodiments of the present disclosure, the phase conductor and the auxiliary phase conductor are made of different materials and/or have different cross-sectional areas in a cross section perpendicular to the first direction.

For example, according to some embodiments of the present disclosure, the busbar module comprises a plurality of the second submodules.

For example, according to some embodiments of the present disclosure, the auxiliary phase conductors in the plurality of second submodules are made of different materials and/or have different cross-sectional areas in the cross section perpendicular to the first direction.

For example, according to some embodiments of the present disclosure, the first housing and all the second housings are formed as an integral unit; or the first housing and each second housing are separately formed and detachably mounted to each other; or all the second housings are formed as an integral unit, which is separately formed from the first housing and detachably mounted thereto.

For example, according to some embodiments of the present disclosure, the busbar module further comprises a connector; the connector electrically connects the first submodule and the second submodule, such that each phase conductor and the corresponding auxiliary phase conductor are connected in parallel to form one phase conductor group, and different phase conductor groups are insulated from each other.

The connector is disposed at an end of the first submodule and the second submodule in the first direction; the phase conductor extends out of the first housing at the end to be electrically connected to the connector; the auxiliary phase conductor extends out of the second housing at the For example, according to some embodiments of the present disclosure, two connected busbar modules share one connector to connect the two busbar modules in series.

According to an aspect of the present disclosure, a bus bar is also provided, which comprise a plurality of bus bar modules according to any embodiment of the present disclosure which are connected in series with each other.

According to one aspect of the present disclosure, an electrical device is also provided, which includes the bus module according to any embodiment of the present disclosure or the bus according to any embodiment of the present disclosure, and an electrical component electrically connected to the phase conductor of the first submodule.

### BRIEF DESCRIPTION OF DRAWINGS

FIG. 1 is a schematic perspective view of a busbar module according to an embodiment of the present disclosure, in which a connector is not connected to a first submodule and a second submodule;
FIG. 2 is a schematic cross-sectional view of the busbar module shown in FIG. 1 at a middle section;
FIG. 3 is a schematic cross-sectional view perpendicular to a first direction of the busbar module at a middle section according to an embodiment of the present disclosure;
FIG. 4 is a schematic cross-sectional view of a busbar module at a middle section according to another embodiment of the present disclosure;
FIG. 5 is a schematic cross-sectional view of the busbar module shown in FIG. 1 perpendicular to the first direction at a connector, where the connector is connected to the first submodule and the second submodule;
FIG. 6 illustrates a first submodule and a second submodule of a busbar module according to another embodiment of the present disclosure;
FIG. 7 is a perspective view of the busbar module shown in FIG. 6 with a cross-section at a middle section of the busbar module;
FIG. 8 is an enlarged perspective view of an end of the second submodule shown in FIG. 6;
FIG. 9 is a schematic cross-sectional view of the busbar module shown in FIG. 6 perpendicular to the first direction at a connector, where the connector is connected to the first submodule and the second submodule;
FIG. 10a to FIG. 10d show different embodiments of a first housing and a second housing of a busbar module according to the present disclosure.

### DETAILED DESCRIPTION

For the purposes of clarifying the objectives, technical solutions and advantages of the technical solutions of the present disclosure, the technical solutions of the embodiments of the present disclosure will be clearly and completely described below in conjunction with the accompanying drawings of the specific embodiments of the present disclosure. Unless otherwise specified, the terms used herein bear their ordinary meanings in the technical field. The same reference numerals in the accompanying drawings denote the same components.

In the description of the present disclosure, it should be noted that unless otherwise explicitly specified and limited, the terms "mount", "connected" and "coupled" shall be interpreted broadly. For example, the connection may be a fixed connection, a detachable connection, or an integral connection; it may be a mechanical connection or an electrical connection; it may be a direct connection, an indirect connection via an intermediate medium, or internal communication between two elements. Those skilled in the art may understand the specific meanings of the above terms in the present disclosure according to actual circumstances.

In the present disclosure, the extending direction of the busbar module is defined as a first direction D1, the arrangement direction of the first submodule and the second submodule is defined as a second direction D2, and the arrangement direction of the phase conductors is defined as a third direction D3. The first direction D1, the second direction D2 and the third direction D3 are mutually perpendicular.

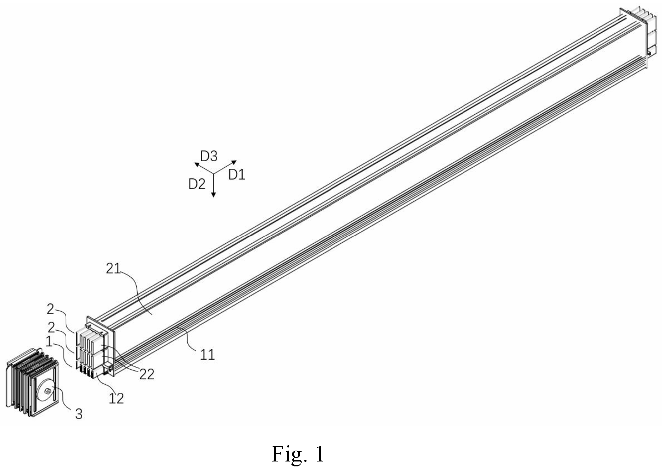

FIG. 1 is a schematic perspective view of a busbar module according to an embodiment of the present disclosure. The busbar module of the present disclosure may include a first submodule 1, a second submodule 2 and a connector 3. FIG. 1 shows a state where the connector 3 is separated from the first submodule 1 and the second submodule 2. The entire busbar module extends along the first direction. In the present disclosure, the busbar module is a section of a busbar, and the busbar may include a plurality of busbar modules. The plurality of busbar modules may be connected in series with each other and connected at ends to form a longer busbar extending along the first direction.

As shown in FIG. 1, the first submodule 1 may extend in the first direction D1, and may include a first housing 11 extending in the first direction D1 and a plurality of phase conductors 12 extending in the first direction D1. The phase conductors 12 are accommodated in the first housing 11 and protrude from the first housing 11 at both ends. The plurality of phase conductors 12 correspond to multiple electrical phases, for example, three phases of U, V and W, or four phases with an additional ground line or an additional neutral line, or five phases with additional ground line and neutral line. As shown in FIG. 1, the plurality of phase conductors 12 may be arranged in the second direction and insulated from each other, which may be realized, for example, by providing an insulating layer on the outer periphery of each phase conductor 12, and/or by the internal structure of the first housing 11.

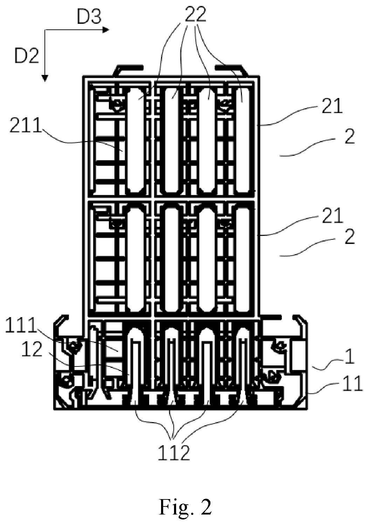

Specifically, the first housing 11 may include a plurality of first accommodating portions 111 each having an open face 112, and each phase conductor 12 is accommodated in one first accommodating portion 111, as shown in FIG. 2. The walls defining the first accommodating portions 111 may be made of an insulating material to achieve insulation between the phase conductors 12. The open faces 112 may be parallel to the first direction D1, allowing electrical components outside the busbar module to be electrically connected to each phase conductor 12. In particular, as shown in FIG. 2 to FIG. 4, the open faces 112 may be oriented uniformly to facilitate connection of external electrical components.

Furthermore, a guide rail feature may be disposed on the first housing 11 for hanging and fixing the above external electrical components. The guide rail feature may adopt any type of guide rail structure in the art, and will not be elaborated herein as it is not the focus of the present disclosure.

Since the first accommodating portion 111 of the first housing 11 is of an open structure, the mechanical strength of the first accommodating portion 111 gradually decreases as the cross-sectional area of the first accommodating portion 111 perpendicular to the first direction D1 increases. Accordingly, the cross-sectional area of the phase conductors 12 is restricted by the geometric dimension of the first housing 11, and the phase conductors 12 of the first submodule 1 alone cannot bear a current exceeding 1250 A. Therefore, the busbar module of the present disclosure further includes the second submodule 2 to increase the current-carrying capacity of the busbar module.

Specifically, as shown in FIG. 1, the second submodule 2 may include a second housing 21 extending in the first direction D1 and a plurality of auxiliary phase conductors 22. The auxiliary phase conductors 22 are accommodated in the second housing 21 and protrude from the second housing 21 at both ends. As shown in FIG. 1 and FIG. 2, the phase conductors 12 correspond to the auxiliary phase conductors 22. Each phase conductor 12 is provided with a corresponding auxiliary phase conductor 22, that is, the first submodule 1 and the second submodule 2 have the same number of phases. Each phase conductor 12 and its corresponding auxiliary phase conductor 22 are connected in parallel to form a phase conductor group, and different phase conductor groups are insulated from each other. For example, each phase conductor 12 and its corresponding auxiliary phase conductor 22 may be in direct contact with each other at the ends, connected via additional connecting conductors, or connected via the connector 3 of the present disclosure, to achieve parallel connection.

As shown in FIG. 1, the auxiliary phase conductors 22 corresponding to different phases may be arranged in the second direction D2 and insulated from each other, which may be realized by providing an insulating layer on the outer periphery of each auxiliary phase conductor 22, and/or by the internal structure of the second housing 21. In addition, for each phase, the second submodule 2 may include a plurality of auxiliary phase conductors 22, and the auxiliary phase conductors 22 corresponding to the same phase are connected in parallel with one another.

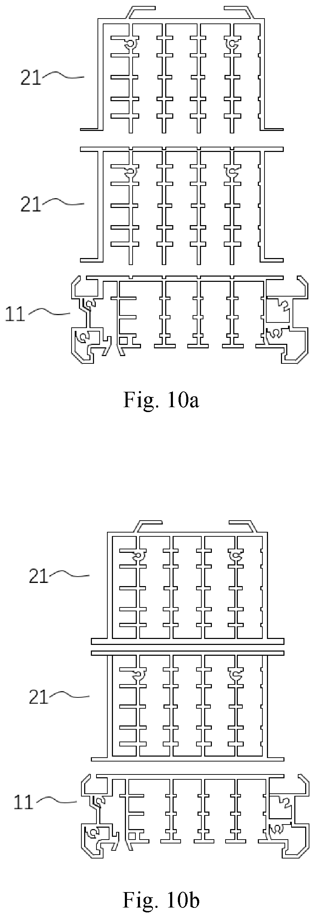

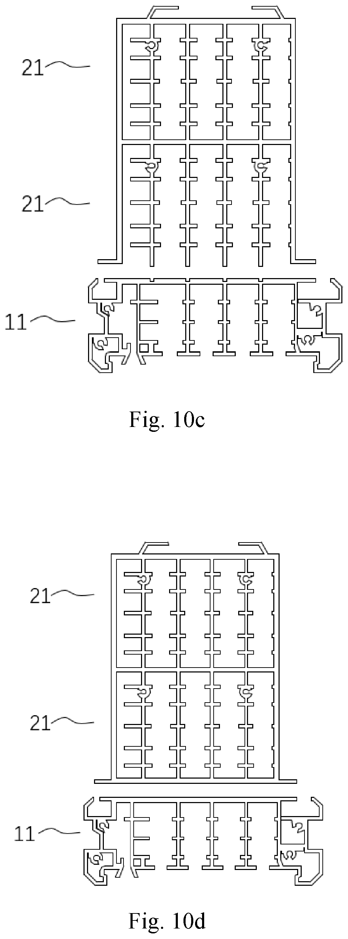

As shown in FIG. 2 to FIG. 4, the second housing 21 may have a closed contour in a cross section perpendicular to the first direction D1 to enclose all the auxiliary phase conductors 22 inside the second submodule 2. Such structure provides enhanced mechanical strength and allows the auxiliary phase conductors 22 accommodated in the second housing 21 to have a larger cross-sectional area. In addition, the second housing 21 may constitute only a part of the closed contour enclosing all the auxiliary phase conductors 22 inside the second submodule 2; that is, the second housing 21 may form the closed contour together with other housings, such as the first housing 11 connected thereto and/or the second housing 21 of another second submodule 2 connected thereto, as shown in FIG. 10a and FIG. 10c.

In particular, as shown in FIG. 1 to FIG. 4, the first housing 11 and all the second housings 21 may be formed as an integral unit to form an integrated complete housing, eliminating the need for assembly during use. Alternatively, the first housing 11 and each second housing 21 may be separately formed and detachably mounted to each other, as shown in FIG. 10a and FIG. 10b, so that second submodules 2 of different models and quantities can be added to adapt to different application scenarios. Alternatively, all the second housings 21 may be formed as an integral unit, which is separately formed from and detachably mounted to the first housing 11, as shown in FIG. 10c and FIG. 10d. The term "formed as an integral unit" in the present disclosure means that all parts of the component are fixed to each other, which can be manufactured by integral molding or assembly and fixation.

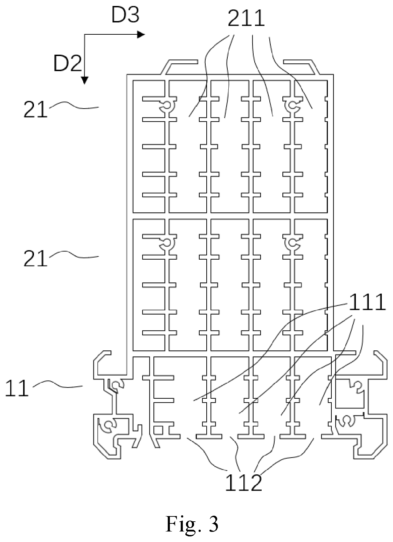

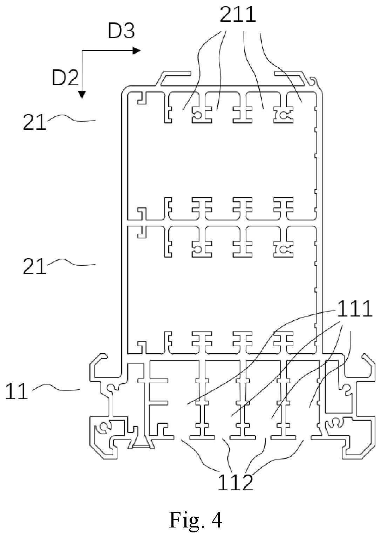

Further, as shown in FIG. 3 and FIG. 4, the second housing 21 may include a plurality of second accommodating portions 211, and each auxiliary phase conductor 22 may be accommodated in one second accommodating portion 211. Although not illustrated, a plurality of auxiliary phase conductors 22 may be accommodated in one second accommodating portion 211.

As shown in FIG. 2 and FIG. 3, each second accommodating portion 211 has a closed contour in a cross section perpendicular to the first direction D1 to surround the auxiliary phase conductor 22 accommodated therein. This structure can better fix the auxiliary phase conductors 22, provide higher mechanical strength of the housing, and achieve inter-phase insulation so that no insulating layer needs to be disposed on the outer periphery of the auxiliary phase conductors 22.

FIG. 4 shows another embodiment of the present disclosure, in which the contour of the second accommodating portion 211 in the cross section perpendicular to the first direction D1 is unclosed. In this case, an insulating layer must be disposed on the outer periphery of each auxiliary phase conductor 22. This embodiment features easier manufacturing of the second housing 21 and material saving.

Further, as shown in FIG. 1, the second submodule 2 is mounted to the first submodule 1, in particular, the second housing 21 is mounted to the first housing 11, such that the lengths of the first submodule 1 and the second submodule 2 along the first direction D1 are aligned in the second direction D2. Thereby, the phase conductors 12 and auxiliary phase conductors 22 protruding from both ends of the first submodule 1 and the second submodule 2 can be conveniently connected.

Further, as shown in FIG. 1, the busbar module may be provided with a plurality of second submodules 2 to further improve the current-carrying capacity of the busbar module. The plurality of second submodules 2 may be arranged, for example, in the second direction and mounted relative to one another, such that the lengths of all the second submodules 2 and the first submodule 1 along the first direction D1 are aligned in the second direction D2.

As shown in FIG. 2, the phase conductors 12 of the first submodule 1 and the auxiliary phase conductors 22 of the second submodule 2 may be made of the same material or different materials. Optionally, the phase conductors 12 of the first submodule 1 and the auxiliary phase conductors 22 of the second submodule 2 may have the same or different cross-sectional areas in the cross section perpendicular to the first direction D1. Accordingly, different auxiliary phase conductors 22 can be flexibly configured according to power supply demands. In addition, the plurality of second submodules 2 may be identical or different from one another. For example, the auxiliary phase conductors 22 in different second submodules 2 may be made of the same or different materials, and/or have the same or different cross-sectional areas in the cross section perpendicular to the first direction D1. For instance, the phase conductor 12 may be a copper conductor and the auxiliary phase conductor 22 may be an aluminum conductor. The cross-sectional area of the phase conductor 12 is smaller than that of the auxiliary phase conductor 22.

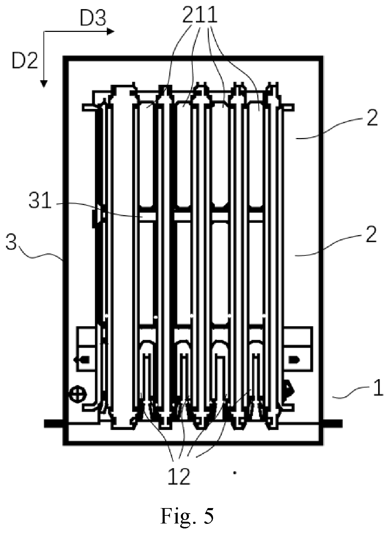

Further, the first submodule 1 and the second submodule 2 of the present disclosure may be electrically connected via the connector 3, wherein each phase conductor 12 is connected in parallel with its corresponding auxiliary phase conductor 22. The connector 3 are disposed at ends of the first submodule 1 and the second submodule 2 in the first direction D1. The phase conductor 12 extends out of the first housing 11 at the ends to connect with the connector 3, and the auxiliary phase conductor 22 extends out of the second housing 21 at the ends to connect with the connector 3. Specifically, as shown in FIG. 5, the connector 3 is also provided with a corresponding number of phase connecting portions 31. The plurality of phase connecting portions 31 are arranged in the third direction D3 and insulated from each other. At the ends, the phase conductor 12 and the auxiliary phase conductor 22 of each phase are aligned in the second direction D2, so as to be conveniently electrically connected by the phase connecting portion 31 of the connector 3, thereby forming a phase conductor group corresponding to each phase.

In addition, the connector 3 can also be used to connect two different busbar modules in series. In particular, two different busbar modules may share one connector 3, such that the phase conductors 12 and auxiliary phase conductors 22 belonging to the same phase of different busbar modules are electrically connected via the phase connecting portion 31, realizing series connection of the two busbar modules.

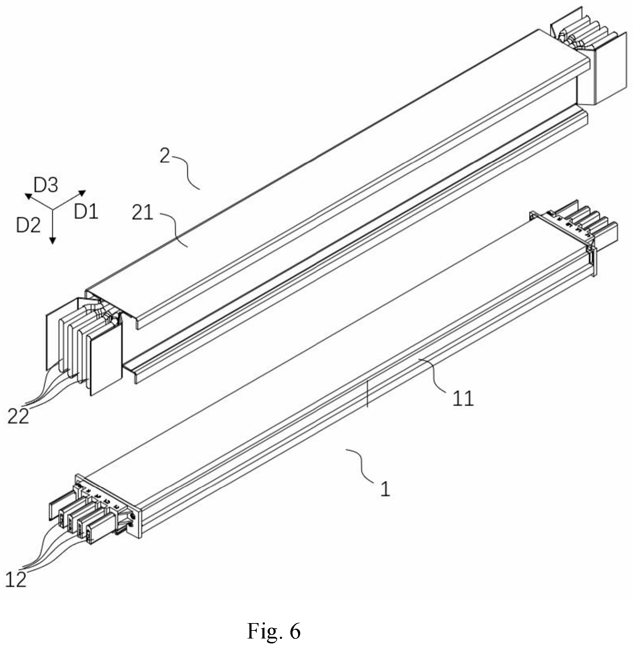

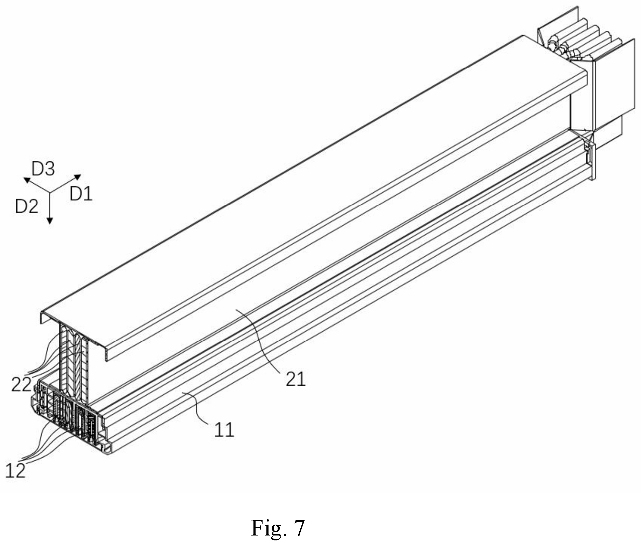

Furthermore, the present disclosure further provides a second submodule 2 according to another embodiment, as shown in FIG. 6 to FIG. 8. The second housing 21 of the second submodule 2 in this embodiment may not be provided with a plurality of independent second accommodating portions 211. The plurality of auxiliary phase conductors 22 in the second housing 21 are adjacently arranged along the third direction D3, and an insulating material is disposed on the outer periphery of each auxiliary phase conductor 22, as shown in the cross section of FIG. 7. Accordingly, the width of the closed contour of the second housing 21 in the third direction D3 is smaller than that of the first housing 11. This structure saves more space and housing material, reduces the weight and cost of the busbar module, and facilitates the installation of external components on the busbar module.

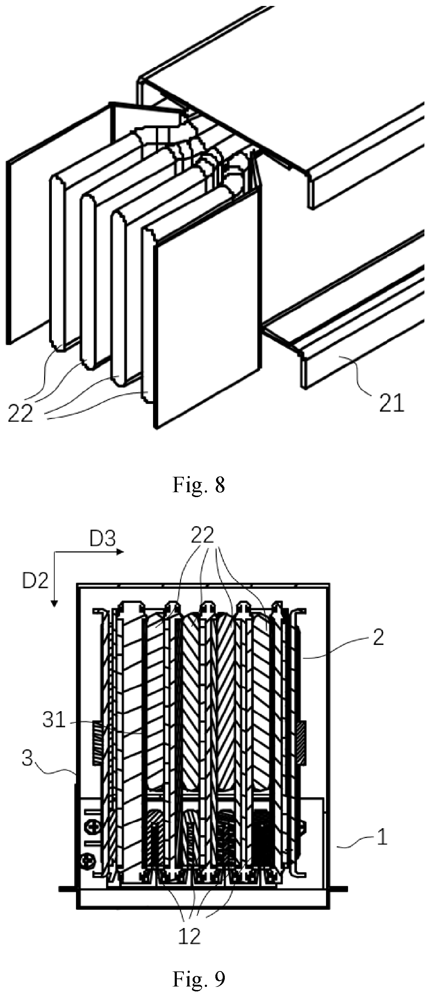

For the second submodule 2 of this embodiment, the ends of the auxiliary phase conductors 22 are structurally modified to be compatible with the connector 3 in the embodiment shown in FIG. 1, so as to achieve universality and connection convenience. As shown in the enlarged view of FIG. 8, the ends of the auxiliary phase conductors 22 are bent such that the ends of the auxiliary phase conductors 22 can be aligned with the phase conductors 12 in the third direction D3 for connection via the connector 3, as shown in FIG. 9.

Furthermore, the present disclosure further provides a busbar, which includes a plurality of busbar modules (not shown) connected in series with each other.

According to another aspect of the present disclosure, an electrical device is further provided, which includes the busbar module or the busbar of the present disclosure. The electrical device further includes electrical components (not shown). The electrical components can be mounted on the busbar module, in particular on the guide rail feature of the first submodule 1, and electrically connected to the phase conductors 12 of the first submodule 1 through the open faces 112. In particular, the electrical device may be applied to an intelligent computing center for AI technology.

It should be understood that the above description is intended to be illustrative rather than restrictive. For example, the above embodiments (and/or aspects thereof) may be used in combination with one another. In addition, many modifications may be made to adapt specific circumstances or materials to the teachings of the present disclosure without departing from the scope thereof. The functions and performance of various elements or modules described herein are merely illustrative and in no way restrictive, serving only as exemplary embodiments. Upon reading the above description, many other embodiments and modifications within the scope of the appended claims will be apparent to those skilled in the art. Therefore, the scope of the present disclosure shall be determined with reference to the appended claims, together with the full scope of equivalents to which such claims are entitled.

In the appended claims, the terms "comprising" and "wherein" are used as plain English equivalents of the corresponding terms "including" and "in which". In addition, in the following claims, the terms "first", "second", "third" and the like are used merely as labels, and are not intended to impose numerical limitations on the objects they modify.

### REFERENCE NUMERALS

1 first submodule
11 first housing
111 first accommodating portion
112 open face
12 phase conductor
2 second submodule
21 second housing
211 second accommodating portion
22 auxiliary phase conductor
3 connector
31 phase connecting portion
D1 first direction
D2 second direction
D3 third direction

## Claims

1. A busbar module, the busbar module comprising:
a first submodule (1), including a first housing (11) extending in a first direction (D1) and a plurality of phase conductors (12), wherein the first housing (11) includes a plurality of first accommodating portions (111) each having an open face (112), and each phase conductor (12) is accommodated in a respective one of the first accommodating portions (111); and
a second submodule (2), including a second housing (21) extending in the first direction (D1) and a plurality of auxiliary phase conductors (22) corresponding to the plurality of phase conductors (12);
wherein the first submodule (1) is electrically connected to the second submodule (2), such that each phase conductor (12) and the corresponding auxiliary phase conductor (22) are connected in parallel to form one phase conductor group, and different phase conductor groups are insulated from each other;
wherein the second submodule (2) is mounted to the first submodule (1), such that lengths of the first submodule (1) and the second submodule (2) along the first direction (D1) are aligned in a second direction (D2) perpendicular to the first direction (D1), and the open face (112) is parallel to the first direction (D1) and allows an electrical component outside the busbar module to be electrically connected to each phase conductor (12).

2. The busbar module according to claim 1, wherein:
in a cross section perpendicular to the first direction (D1), the plurality of auxiliary phase conductors (22) are enclosed by a closed contour, and the second housing (21) constitutes at least a part of the closed contour.

3. The busbar module according to claim 2, wherein:
the second housing (21) includes a plurality of second accommodating portions (211), and each auxiliary phase conductor (22) is accommodated in a respective one of the second accommodating portions (211).

4. The busbar module according to claim 3, wherein:
a contour of the second accommodating portion (211) in a cross section perpendicular to the first direction (D1) is closed to surround the auxiliary phase conductor (22) accommodated therein.

5. The busbar module according to any of claims 2 to 4, wherein:
the plurality of auxiliary phase conductors (22) in the second housing (21) are arranged adjacently along a third direction (D3) perpendicular to both the first direction (D1) and the second direction (D2); an insulating material is disposed on an outer periphery of each auxiliary phase conductor (22); and a width of the closed contour formed by the second housing (21) in the third direction (D3) is smaller than that of the first housing (11).

6. The busbar module according to any of claims 1 to 4, wherein at least one of:
the phase conductor (12) and the auxiliary phase conductor (22) are made of different materials,
the phase conductor (12) and the auxiliary phase conductor (22) have different cross-sectional areas in a cross section perpendicular to the first direction (D1).

7. The busbar module according to any of claims 1 to 6, wherein:
the busbar module comprises a plurality of the second submodules (2).

8. The busbar module according to claim 7, wherein at least one of:
the auxiliary phase conductors (22) in the plurality of second submodules (2) are made of different materials, or
the auxiliary phase conductors (22) in the plurality of second submodules (2) have different cross-sectional areas in the cross section perpendicular to the first direction (D1).

9. The busbar module according to claim 8, wherein:
the first housing (11) and all the second housings (21) are formed as an integral unit.

10. The busbar module according to claim 8, wherein:
the first housing (11) and each second housing (21) are separately formed and detachably mounted to each other.

11. The busbar module according to claim 8, wherein:
all the second housings (21) are formed as an integral unit, which is separately formed from the first housing (11) and detachably mounted thereto.

12. The busbar module according to any of claims 1 to 11, wherein:
the busbar module comprises a connector (3); the connector (3) electrically connects the first submodule (1) and the second submodule (2), such that each phase conductor (12) and the corresponding auxiliary phase conductor (22) are connected in parallel to form one phase conductor group, and different phase conductor groups are insulated from each other;
wherein the connector (3) is disposed at an end of the first submodule (1) and the second submodule (2) in the first direction (D1); the phase conductor (12) extends out of the first housing (11) at the end to be electrically connected to the connector (3); the auxiliary phase conductor (22) extends out of the second housing (21) at the end to be electrically connected to the connector (3).

13. The busbar module according to claim 12, wherein:
two connected busbar modules share one connector (3) to connect the two busbar modules in series.

14. A busbar, comprising a plurality of busbar modules according to any of claims 1 to 13 connected in series with each other.
